# FASCICULE DE BREVET EUROPEEN

(11) **EP 1 499 669 B1**
(45) Date de publication et mention de la délivrance du brevet: **11.01.2006**
(21) Numéro de dépôt: 03725030.5
(22) Date de dépôt: 15.04.2003
(51) Int. Cl.: C08K 5/00, C08J 3/00, C08L 9/00, C07F 7/08

(54) **POLYSULFURE SILOXANE UTILISABLE COMME AGENT DE RETICULATION, ET SON PROCEDE D'OBTENTION**
ALS VERNETZUNGSMITTEL VERWENDBARES POLYSULFIDSILOXAN UND SEIN HERSTELLUNGSVERFAHREN
SILOXANE POLYSULPHIDE USABLE AS CROSS-LINKING AGENT AND PROCESS FOR OBTAINING SUCH.

(30) Priorité: 18.04.2002 FR 0204964
(43) Date de publication de la demande: 26.01.2005
(73) Titulaire: Société de Technologie Michelin, 63000 Clermont-Ferrand Cedex 09 (FR); MICHELIN RECHERCHE ET TECHNIQUE S.A., CH-1763 Granges-Paccot (CH)
(72) Inventeur: BELIN, Laure, F-63200 Riom (FR); BLANCHARD, Christiane, F-63119 Chateaugay (FR)
(74) Mandataire: Ribière, Joel
(86) Numéro de dépôt international: PCT/EP2003/003905
(87) Numéro de publication internationale: WO 2003/087208

(56) Documents cités:
- US-A- 4 125 552
- US-A- 4 129 585
- US-A- 5 650 457
- US-A- 5 834 536
- US-B1- 6 277 902

## Description

La présente invention se rapporte aux agents de réticulation utilisables pour la réticulation des réseaux élastomériques, notamment dans la fabrication des pneumatiques ou produits semi-finis pour pneumatiques.

Depuis la découverte de la vulcanisation ou réticulation du caoutchouc par le soufre, de nombreuses améliorations ont été apportées au procédé de base, mais le soufre reste encore de nos jours l'élément indispensable d'un point de vue industriel à la réticulation des élastomères diéniques.

Le principe de la vulcanisation réside dans la création de ponts de soufre entre deux macromolécules par réaction sur les doubles liaisons de ces élastomères diéniques. Une des caractéristiques remarquables de la vulcanisation est la simplicité avec laquelle cette réaction peut être contrôlée par ajout de composés présentant un effet accélérateur ou retardateur. En jouant sur les taux respectifs de soufre et d'accélérateurs, il est notamment possible de contrôler le rendement de vulcanisation, d'obtenir des ponts de soufre de différentes configurations qui conduisent, pour une composition de caoutchouc donnée, à des ajustements possibles des propriétés, tant à l'état cru qu'à l'état cuit.

Toutefois, la vulcanisation au soufre présente certains inconvénients connus, parmi lesquels le problème d'effleurissement ("*blooming*") à l'état cru, dû à une migration du soufre à la surface des articles en caoutchouc considérés, et surtout une résistance limitée des vulcanisats à l'état cuit, due au vieillissement thermique de ces derniers ("*thermal ageing*").

En particulier, il est bien connu que les vulcanisats d'élastomères diéniques réticulés à partir du soufre présentent une sensibilité importante à la température lorsque cette dernière atteint une valeur voisine de la température de cuisson ou vulcanisation initiale. Il s'ensuit une chute de la densité des ponts de soufre formés initialement lors de la vulcanisation, la distribution du réseau de vulcanisation évoluant vers un raccourcissement, c'est-à-dire une diminution des ponts polysulfures au profit des ponts monosulfures. Ce phénomène, connu sous le terme de réversion, s'accompagne d'une dégradation des propriétés mécaniques du vulcanisat.

US5650457 décrit des mélanges de caoutchouc contenant un caoutchouc, un agent de réticulation, une matière de charge, un additif de renforcement répondant à la formule suivante 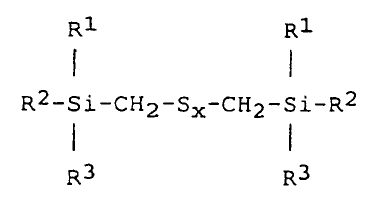 et servant à la fabrication de pneus à faible résistance de roulement ayant une bonne résistance au dérapage sur sol mouillé et une haute résistance à l'abrasion.

Ainsi, l'homme de l'art est toujours à la recherche aujourd'hui de nouveaux composés permettant de pallier les inconvénients précités, en particulier de réticuler les chaînes d'élastomères diéniques tout en offrant une meilleure stabilité thermique.

Or, les Demanderesses ont découvert lors de leurs recherches certains composés nouveaux, du type siloxane, qui permettent de manière inattendue de vulcaniser ou réticuler les compositions de caoutchouc sans aucune addition de soufre, tout en offrant aux vulcanisats une résistance améliorée à la réversion. Ces composés ne posent pas par ailleurs le problème d'effleurissement précité.

En conséquence, un premier objet de l'invention concerne un composé polysulfure siloxane répondant à la formule générale (I) qui suit : 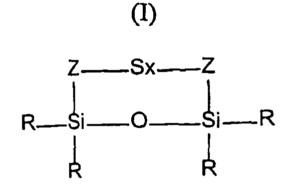
dans laquelle :
- le nombre x, entier ou fractionnaire, est égal ou supérieur à 2 ;
- les radicaux Z, identiques ou différents, sont des groupes de liaison divalents comportant de préférence de 1 à 18 atomes de carbone ;
- les radicaux R, identiques ou différents, sont des groupes hydrocarbonés comportant de préférence de 1 à 18 atomes de carbone.

Le polysulfure siloxane selon l'invention est susceptible d'être préparé par un procédé qui constitue un autre objet de l'invention, ledit procédé comportant les étapes suivantes (x, Z et R ayant les significations précédentes) :
- **a**) on part d'un organosilane halogéné (ci-après produit A) de formule (Hal = halogène): 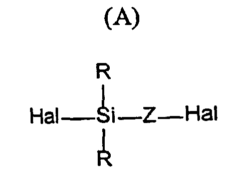
- **b**) on lui fait subir soit une alcoolyse par action d'un alcool R'-OH (R' radical hydrocarboné), soit une hydrolyse par action d'eau dans un solvant organique inerte, dans les deux cas en présence d'une base organique pour piéger l'halogénure d'acide formé, pour obtenir (ci-après produit B) soit un monoalkoxysilane (dans ce cas, R' est le radical hydrocarboné dans la formule (B)), soit un mono-hydroxysilane (dans ce cas, R' est H dans la formule (B)), de formule : 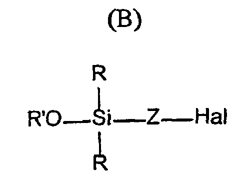
- **c**) on réalise une étape de sulfuration sur le produit B par action d'un polysulfure, pour obtenir à titre de produit intermédiaire (ci-après produit C) un polysulfure d'alkoxysilane ou d'hydroxysilane de formule : 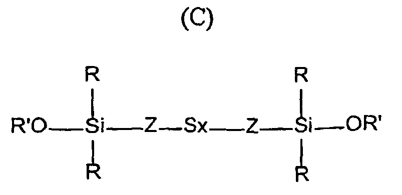
- **d**) puis on réalise une étape de cyclisation du produit C pour générer le produit de formule (I) visé :

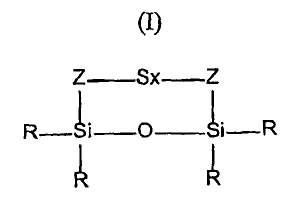

L'invention a également pour objet l'utilisation à titre d'agent de réticulation, dans une composition de caoutchouc à base d'élastomère diénique et d'une charge renforçante, d'un polysulfure siloxane de formule (I) ci-dessus.

L'invention ainsi que ses avantages seront aisément compris à la lumière de la description et des exemples de réalisation qui suivent, ainsi que des figures annexées qui schématisent des procédés d'obtention de polysulfures siloxane selon l'invention, ou représentent des rhéogrammes (courbes de cuisson) enregistrés pour des compositions de caoutchouc réticulées conformément ou non à l'invention.

### I. MESURES ET TESTS UTILISES

Les compositions de caoutchouc, dans lesquelles sont testés les polysulfures siloxane, sont caractérisées, avant et après cuisson, comme indiqué ci-après.

### I-1. Plasticité Mooney

On utilise un consistomètre oscillant tel que décrit dans la norme française NF T 43-005 (1991). La mesure de plasticité Mooney se fait selon le principe suivant : la composition à l'état cru (i.e., avant cuisson) est moulée dans une enceinte cylindrique chauffée à 100°C. Après une minute de préchauffage, le rotor tourne au sein de l'éprouvette à 2 tours/minute et on mesure le couple utile pour entretenir ce mouvement après 4 minutes de rotation. La plasticité Mooney (ML 1+4) est exprimée en "unité Mooney" (UM, avec 1 UM = 0.83 N.m).

### I-2. Temps de grillage

Les mesures sont effectuées à 130°C, conformément à la norme française NF T 43-005 (1991). L'évolution de l'indice consistométrique en fonction du temps permet de déterminer le temps de grillage des compositions de caoutchouc, apprécié conformément à la norme précitée par le paramètre T5 (cas d'un grand rotor), exprimé en minutes, et défini comme étant le temps nécessaire pour obtenir une augmentation de l'indice consistométrique (exprimée en UM) de 5 unités au dessus de la valeur minimale mesurée pour cet indice.

### I-3. Rhéométrie

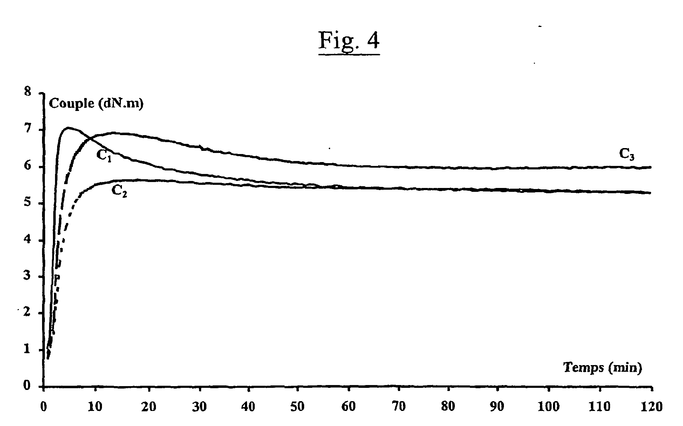

Les mesures sont effectuées à 150°C ou à 165°C, selon les cas, avec un rhéomètre à chambre oscillante, selon la norme DIN 53529 - partie 3 (juin 1983). L'évolution du couple rhéométrique en fonction du temps décrit l'évolution de la rigidification de la composition par suite de la réaction de vulcanisation (voir figure 4 annexée). Les mesures sont traitées selon la norme DIN 53529 - partie 2 (mars 1983) : les couples minimum et maximum, mesurés en dN.m (déciNewton.mètre), sont respectivement nommés Cₘᵢₙ et Cₘₐₓ ; tᵢ est le délai d'induction, c'est-à-dire le temps nécessaire au début de la réaction de vulcanisation. On mesure également l'écart noté ΔCouple (en dN.m) entre Cₘₐₓ et Cₘᵢₙ qui permet d'apprécier le rendement de vulcanisation.

Les propriétés mécaniques ou dynamiques indiquées ci-après (paragraphes I-4 et I-5) sont celles mesurées à l' "optimum de cuisson", c'est-à-dire, de manière connue, celles obtenues, pour une température de cuisson déterminée, après la durée de cuisson minimale pour atteindre le couple rhéométrique maximum Cₘₐₓ.

### I-4. Essais de traction

Ces essais permettent de déterminer les contraintes d'élasticité et les propriétés à la rupture. Sauf indication différente, ils sont effectués conformément à la norme française NF T 46-002 de septembre 1988. On mesure en seconde élongation (i.e. après un cycle d'accommodation au taux d'extension prévu pour la mesure elle-même) les modules sécants nominaux (ou contraintes apparentes, en MPa) à 10% d'allongement (noté MA10), 100% d'allongement (noté MA100) et 300% d'allongement (noté MA300). On mesure également les contraintes à la rupture (en MPa) et les allongements à la rupture (en %). Toutes ces mesures de traction sont effectuées dans les conditions normales de température (23 ± 2°C) et d'hygrométrie (50 ± 5% d'humidité relative), selon la norme française NF T 40-101 (décembre 1979).

### I-5. Propriétés dynamiques

Les propriétés dynamiques ΔG* et tan(δ)ₘₐₓ sont mesurées sur un viscoanalyseur (Metravib VA4000), selon la norme ASTM D 5992-96. On enregistre la réponse d'un échantillon de composition vulcanisée (éprouvette cylindrique de 4 mm d'épaisseur et de 400 mm² de section), soumis à une sollicitation sinusoïdale en cisaillement simple alterné, à la fréquence de 10Hz, dans les conditions normales de température (23°C) selon la norme ASTM D 1349-99. On effectue un balayage en amplitude de déformation de 0,1 à 50% (cycle aller), puis de 50% à 1% (cycle retour). Les résultats exploités sont le module complexe de cisaillement dynamique (G*) et le facteur de perte tan(δ). Pour le cycle retour, on indique la valeur maximale de tan(δ) observée, noté tan(δ)ₘₐₓ, ainsi que l'écart de module complexe (ΔG*) entre les valeurs à 0,15 et 50% de déformation (effet Payne).

### I-6. Mesure de la réversion

La réversion peut être analysée selon différentes méthodes, le but étant de déterminer, de manière indirecte, l'évolution de la densité des ponts de soufre, entre une cuisson à l'optimum (Cₘₐₓ) et une cuisson prolongée.

La première approche consiste à mesurer l'évolution du couple rhéométrique : les paramètres ΔR₆₀ et ΔR₁₂₀ représentent l'évolution en % du couple entre Cₘₐₓ et le couple mesuré après 60 ou 120 min de cuisson, respectivement, à une température de cuisson déterminée (par exemple 150°C ou 165°C).

La seconde approche consiste à mesurer l'évolution des modules MA100 ou MA300 : les paramètres ΔMA100 et ΔMA300 correspondent à l'évolution en % des modules respectifs entre l'optimum de cuisson (Cₘₐₓ) et après une cuisson prolongée de 2 heures, à une température de cuisson déterminée (par exemple 150°C ou 165°C).

### II. CONDITIONS DE REALISATION DE L'INVENTION

Dans la présente description, sauf indication expresse différente, tous les pourcentages (%) indiqués sont des % en masse.

### II-1. Polysulfure siloxane de l'invention

Le premier objet de l'invention est donc un polysulfure siloxane répondant à la formule (I) précitée : 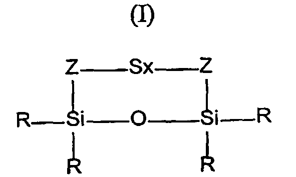
dans laquelle :
- le nombre x, entier ou fractionnaire, est égal ou supérieur à 2 ;
- les radicaux Z, identiques ou différents, sont des groupes de liaison divalents comportant de préférence de 1 à 18 atomes de carbone ;
- les radicaux R, identiques ou différents, sont des groupes hydrocarbonés comportant de préférence de 1 à 18 atomes de carbone.

Ce composé se caractérise par la présence, dans sa molécule, d'un groupement polysulfure Sₓ (avec x ≥ 2, c'est-à-dire le groupement disulfure inclus) fixé, par l'intermédiaire de deux atomes de silicium, sur une structure (cycle) di-siloxane ≡Si-0-Si≡. Il peut donc être qualifié de polysulfure di-siloxane cyclique.

Les radicaux R, linéaires ou ramifiés, comportant de préférence de 1 à 18 atomes de carbone, sont plus préférentiellement choisis parmi les alkyles, cycloalkyles ou aryles, en particulier parmi les alkyles en C₁-C₆, les cycloalkyles en C₅-C₈, et le radical phényle ; ces groupes alkyles, cycloalkyles ou phényle peuvent également contenir des hétéroatomes tels que N, O, S.

Parmi ces radicaux R, on citera notamment, à titre d'exemples, ceux choisis dans le groupe constitué par méthyle, éthyle, n-propyle, iso-propyle, n-butyle, sec-butyle, tert-butyle, n-pentyle, néopentyle, n-hexyle, 2-éthylhexyle, n-octyle, iso-octyle, cyclopentyle, cyclohexyle, 2-méthylcyclohexyle, phényle, toluyle, benzyle. Plus préférentiellement encore, les radicaux R, identiques ou différents, sont des alkyles en C₁-C₃ (à savoir méthyle, éthyle, n-propyle, iso-propyle), tout particulièrement choisis parmi méthyle et éthyle.

Les radicaux Z, substitués ou non substitués, comportant de préférence de 1 à 18 atomes de carbone, sont de préférence des radicaux hydrocarbonés, saturés ou non saturés, ces radicaux Z pouvant être interrompus au sein de la chaîne hydrocarbonée par au moins un hétéroatome tel que O, S ou N. Conviennent notamment des groupements alkylène en C₁-C₁₈ ou des groupements arylène en C₆-C₁₂, plus particulièrement des alkylènes en C₁-C₁₀.

Des composés de formule (I) particulièrement préférentiels sont ceux dans lesquels les radicaux R, identiques ou différents, sont des groupes alkyles en C₁-C₃ et les radicaux Z, identiques ou différents, sont des alkylènes en C₁-C₄ (méthylène, éthylène, propylène, butylène), en particulier en C₂-C₄, avec x plus préférentiellement supérieur à 2.

Parmi ces derniers, on citera tout particulièrement le polysulfure tétraméthyl-disiloxane cyclique répondant à la formule (II) (soit R = méthyle) : 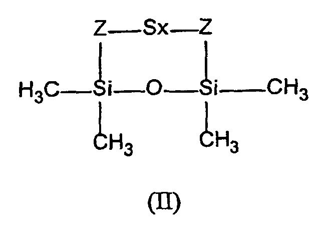
dans lequel, préférentiellement, "x" a une valeur moyenne comprise entre 3 et 5, plus préférentiellement proche de 4 (c'est-à-dire comprise entre 3,5 et 4,5) et Z est un alkylène en C₂-C₄.

A titre d'exemple particulier de composé de formule (II), on citera notamment celui de formule développée (II-1) ci-après, dans laquelle Z représente le groupe propylène :

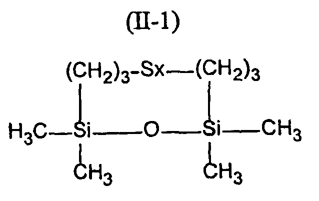

Dans les formules (I) et (II) ci-dessus, le nombre x d'atomes de soufre peut varier dans une large mesure, par exemple de 2 à 9, selon les conditions particulières de synthèse du polysulfure ; toutefois, les valeurs de x sont de préférence choisies dans un domaine de 2 (disulfures) à 6 (hexasulfures) en passant par les trisulfures (x=3), les tétrasulfures (x=4) et pentasulfures (x=5) correspondants. Plus préférentiellement encore, x est choisi compris entre 3 et 5, plus particulièrement proche de 4 (c'est-à-dire compris entre 3,5 et 4,5).

Ces polysulfures siloxane de l'invention peuvent être préparés selon un procédé de synthèse nouveau qui constitue un autre objet de la présente invention.

### II-2. Procédé de synthèse

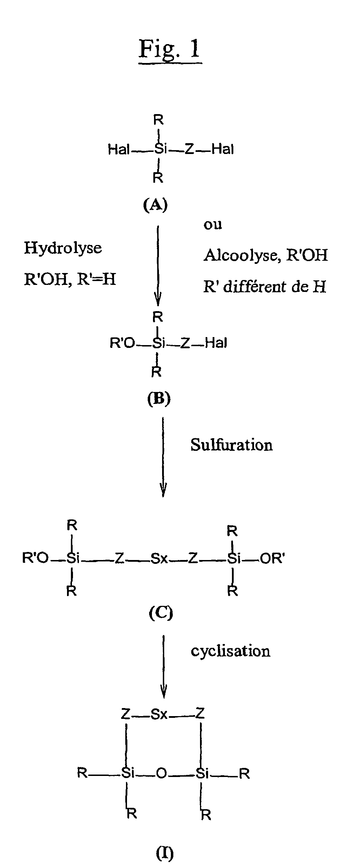

Le procédé conforme à l'invention, pour préparer un polysulfure siloxane de formule (I), est schématisé sur la figure 1 annexée. Il comporte les étapes suivantes (x, Z et R ayant les significations précédentes) :
- **a**) on part d'un organosilane halogéné (ci-après produit A) de formule (A) (Hal = halogène): 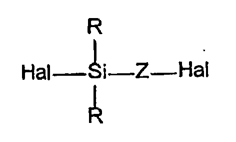
- **b**) on lui fait subir soit une alcoolyse par action d'un alcool R'-OH (R' radical hydrocarboné), soit une hydrolyse par action d'eau dans un solvant organique inerte, dans les deux cas en présence d'une base organique pour piéger l'halogénure d'acide formé, pour obtenir (ci-après produit B) soit un monoalkoxysilane (dans ce cas, R' est le radical hydrocarboné dans la formule (B)), soit un mono-hydroxysilane (dans ce cas, R' est H dans la formule (B)), de formule (B): 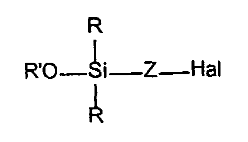
- **c**) on réalise une étape de sulfuration sur le produit B par action d'un polysulfure, pour obtenir à titre de produit intermédiaire (ci-après produit C) un polysulfure d'alkoxysilane ou d'hydroxysilane de formule (C): 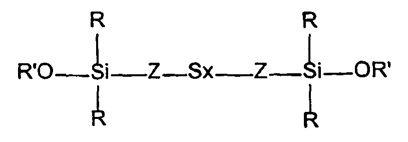
- **d**) puis on réalise une étape de cyclisation du produit C pour générer le produit de formule (I) visé :

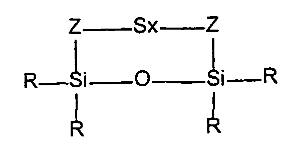

Les halogènes (Hal) du silane de départ (produit A) peuvent être identiques ou différents, choisis de préférence parmi brome et chlore ; on utilise plus préférentiellement le chlore. D'une manière générale, les halogénosilanes de départ (produits A) et leurs dérivés intermédiaires (produits B ou C) sont des produits liquides ; ils peuvent donc être utilisés tels quels ou bien à l'état dilué dans un solvant approprié, lors de la mise en oeuvre des différentes étapes du procédé de l'invention.

L'étape d'hydrolyse du produit A, le cas échéant, est réalisée directement sur le silane halogéné de départ (produit A), par action de l'eau dans un solvant organique inerte, par exemple un éther, et en présence d'une base organique destinée à piéger l'halogénure d'acide formé.

L'étape d'alcoolyse du produit A consiste quant à elle à substituer l'halogène (Hal) porté par l'atome de silicium du produit A par le groupement alkoxyle (OR') d'un alcool, en présence d'une base organique destinée à piéger l'halogénure d'acide libéré au cours de la réaction. Le radical hydrocarboné R' de l'alcool (R'-OH) comporte de préférence 1 à 8 atomes de carbone, il est plus préférentiellement choisi parmi les alkyles en C₁-C₆, plus préférentiellement encore parmi les alkyles en C₁-C₃, en particulier méthyle ou éthyle. A titre de base organique destinée à piéger l'halogénure d'acide formé, on peut utiliser une amine, de préférence une amine tertiaire telle que la triéthylamine. Afin de mieux piéger l'halogénure d'acide; l'alcoolyse est conduite à une température qui est de préférence inférieure à 15°C, plus préférentiellement inférieure à 10°C.

Pour l'étape de sulfuration, on peut utiliser notamment un polysulfure (x ≥ 2) d'ammonium ou métallique, de formule M₂Sₓ ou M'Sₓ (M = métal alcalin ou NH₄ ; M' = Zn ou métal alcalino-terreux) ; des exemples de tels composés sont les polysulfures de Na, K, Cs, Rb, Ca, Mg, Zn et NH₄, x étant de préférence compris dans un domaine de 2 à 6, plus préférentiellement de 3 à 5 (en particulier entre 3,5 et 4,5). On utilise de préférence un polysulfure de sodium Na₂Sₓ, en particulier Na₂S₂, Na₂S₃, Na₂S₄, Na₂S₅, Na₂S₆, ce polysulfure étant de préférence généré par action de soufre (S₈) sur Na₂S. De manière connue, la préparation d'un tel polysulfure est réalisée dans un solvant, organique ou non, tel que par exemple de l'eau, des alcools, des cétones ou des éthers, solvants dans lesquels les réactifs sont partiellement ou totalement solubles.

Toutefois, on préfère conduire l'étape de sulfuration en l'absence de tout alcool ; on travaille alors de préférence en phase aqueuse, plus préférentiellement dans un milieu biphasique eau/solvant organique (par exemple toluène, xylène, benzène, heptane ou équivalents), comme décrit par exemple dans les documents EP-A-694 552 ou US-A-5 405 985 relatifs à la synthèse d'alkoxysilanes polysulfurés. La réaction est alors conduite de préférence en présence d'un catalyseur de transfert de phase auquel est plus préférentiellement ajouté un sel de formule M"Hal ou M"SO₄, M" étant choisi parmi Li, Na, K et Hal étant choisi parmi F, Cl et Br. Le sel utilisé est alors choisi de préférence parmi NaCl, NaBr, Na₂SO₄ ; on utilise encore plus préférentiellement NaCl. La quantité de sel peut varier par exemple de 10% en poids de la solution aqueuse jusqu'à saturation complète de la solution. Le catalyseur de transfert de phase est par exemple le bromure de tétrabutyl-ammonium (TBAB).

L'étape de sulfuration est conduite de préférence sous gaz inerte tel que l'argon. La température du milieu réactionnel n'est pas critique, on peut par exemple travailler à température ambiante ; on préfère toutefois opérer à chaud pour augmenter la vitesse de réaction, par exemple entre 60°C et 100°C voire jusqu'au point d'ébullition du solvant. Le ratio molaire entre l'hydroxysilane ou l'alkoxysilane (produit B) et le polysulfure est de préférence ajusté de manière à avoir un léger excès de polysulfure par rapport à la quantité stoechiométrique.

Si la sulfuration est conduite en phase organique, le produit B est lui-même de préférence pré-dilué dans le solvant organique inerte tel qu'un alcool, une cétone ou un éther. Lorsque la réaction est terminée, on élimine par filtration le sel (halogénure de métal) qui s'est formé et on débarrasse le filtrat du solvant organique par distillation sous vide. Dans le cas d'une sulfuration en phase aqueuse ou biphasique (eau/solvant organique), on isole le cas échéant la phase organique contenant le produit C et on distille successivement sous vide le solvant réactionnel suivi du réactif B n'ayant pas réagi.

L'étape de cyclisation sur le produit C est conduite différemment selon qu'il s'agit d'un polysulfure d'hydroxysilane, dans ce cas par une étape de condensation préférentiellement catalysée par la présence d'un acide ou d'une base, ou bien d'un polysulfure d'alkoxysilane, dans ce cas par une étape d'hydrolyse acide ou basique, de préférence du type acide. Pour la réalisation de cette étape de cyclisation, on introduit par exemple le produit C, dilué dans un solvant organique, dans un mélange constitué d'une quantité appropriée d'eau, par exemple à raison de deux équivalents molaires par rapport au polysulfure mis en réaction, et d'une quantité catalytique de catalyseur tel qu'un acide organique comme un acide carboxylique, plus particulièrement l'acide trifluoroacétique.

Les polysulfures siloxanes synthétisés selon le procédé décrit ci-dessus sont en fait des mélanges de polysulfures (par exemple de x=2 à x=9), avec par conséquent une valeur moyenne pour x qui est différente d'une valeur entière.

### II-3. Utilisation à titre d'agent de réticulation

Les polysulfures siloxane précédemment décrits se sont révélés suffisamment efficaces à eux seuls pour la réticulation d'élastomères diéniques.

Ils peuvent avantageusement remplacer, dans les compositions de tels élastomères, la totalité du soufre et autre(s) agent(s) donneur(s) de soufre usuel(s). Ils sont alors utilisés, dans ces compositions, à un taux préférentiel supérieur à 0,5 pce, plus préférentiellement compris entre 1 et 15 pce, en particulier entre 3 et 12 pce (pce = parties en poids pour cent d'élastomère).

Sans que ceci soit limitatif, il peuvent être utilisés, à titre d'exemple, pour la réticulation de compositions de caoutchouc destinées à la fabrication de pneumatiques, à base d'au moins un élastomère diénique et une charge renforçante à un taux compris par exemple entre 30 et 150 pce.

Pour une telle utilisation, l'élastomère diénique est alors de préférence choisi dans le groupe des élastomères diéniques fortement insaturés constitué par les polybutadiènes (BR), le caoutchouc naturel (NR), les polyisoprènes de synthèse (IR), les copolymères de butadiène (en particulier butadiène-styrène (SBR), butadiène-isoprène (BIR), butadiène-acrylonitrile (NBR)), les copolymères d'isoprène (notamment isoprène-styrène (SIR) ou butadiène-styrène-isoprène (SBIR)), et les mélanges de ces élastomères.

On peut utiliser tout type de charge renforçante connue pour ses capacités à renforcer une composition de caoutchouc utilisable pour la fabrication de pneumatiques, par exemple une charge organique tel que du noir de carbone ou encore une charge inorganique renforçante telle que de la silice à laquelle sera alors associée un agent de couplage. Comme noirs de carbone conviennent tous les noirs de carbone, notamment les noirs du type HAF, ISAF, SAF conventionnellement utilisés dans les pneumatiques (noirs dits de grade pneumatique), par exemple dans les bandes de roulement de ces pneumatiques. Parmi ces derniers, on citera plus particulièrement les noirs de carbone renforçants des séries 100, 200 ou 300 (grades ASTM), comme par exemple les noirs N115, N134, N234, N330, N339, N347, N375. Comme charges inorganiques renforçantes conviennent notamment des charges minérales du type siliceuse ou alumineuse, en particulier de la silice (SiO₂). La silice utilisée peut être toute silice renforçante connue de l'homme du métier, notamment toute silice précipitée ou pyrogénée présentant une surface BET ainsi qu'une surface spécifique CTAB toutes deux inférieures à 450 m²/g, de préférence de 30 à 400 m²/g. Les silices précipitées hautement dispersibles (dites "HD") sont préférées, en particulier lorsque l'invention est mise en oeuvre pour la fabrication de pneumatiques présentant une faible résistance au roulement. Pour coupler la charge inorganique renforçante à l'élastomère diénique, on peut utiliser tout agent de couplage connu, en particulier des organosilanes ou des polyorganosiloxanes au moins bifonctionnels.

Au polysulfure siloxane précédemment décrit est de préférence associé, dans sa fonction d'agent de réticulation, un accélérateur primaire de vulcanisation, à un taux préférentiel compris entre 0,1 et 5 pce, plus préférentiellement compris entre 0,5 et 3 pce.

Conviennent en particulier les accélérateurs du type thiazoles ainsi que leurs dérivés de formule (III) : 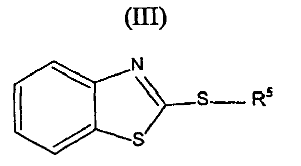
dans laquelle R⁵ représente un atome d'hydrogène, un groupement 2-mercaptobenzothiazyle de formule (IV) : 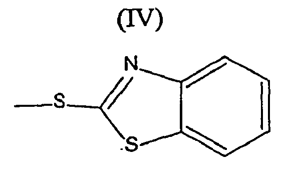
ou encore un groupement de formule (V) : 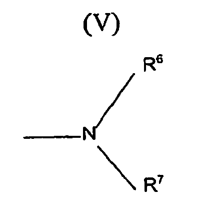
dans laquelle R⁶ et R⁷ représentent indépendamment un atome d'hydrogène, un groupement 2-mercaptobenzothiazyle (formule IV), un groupement alkyle en C₁-C₄ ou un groupement cycloalkyle en C₅-C₈, comportant de préférence 6 maillons, ledit cycle pouvant comporter au moins un hétéroatome tel que S, O ou N.

Des accélérateurs thiazoles et dérivés préférentiels sont notamment choisis dans le groupe constitué par le 2-mercaptobenzothiazole, le disulfure de 2-mercapto-benzothiazyle, le N-cyclohexyl-2-benzothiazyle sulfénamide, N,N-dicyclohexyl-2-benzothiazyle sulfénamide, N-ter-butyl-2-benzothiazyle sulfénamide, N-cyclohexyl-2-benzothiazyle sulfénimide, N-ter-butyl-2-benzothiazyle sulfénimide et les mélanges de ces composés.

Comme accélérateurs conviennent également les composés de la famille des thiurames (formule VI) et les dérivés dithiocarbamates de zinc (formule VII) : 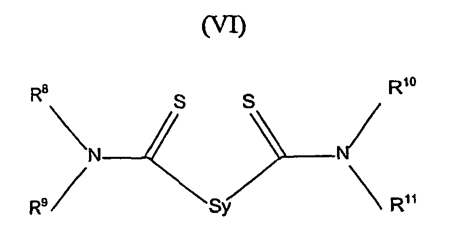 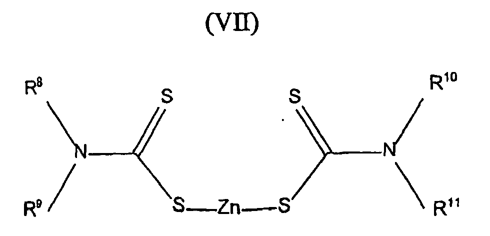
dans lesquelles y varie de 1 à 4, y est plus particulièrement égal à 1 ou 2 ; R⁸, R⁹, R¹⁰ et R¹¹ représentent chacun indépendamment un groupement alkyle comprenant de 1 à 8 atomes de carbone, un groupement benzyle, une combinaison entre R⁸ et R⁹ et une combinaison entre R¹⁰ et R¹¹ pour former un groupement cyclique pentaméthylène ou un groupement cyclique méthyl-pentaméthylène et dans lesquelles R⁸ et R⁹ et R¹⁰ et R¹¹ sont reliés entre eux.

Des accélérateurs de types thiurames sont notamment choisis dans le groupe préférentiel constitué par le monosulfure de tétraméthyl-thiurame, le disulfure de tétraméthyl-thiurame, le disulfure de tétraéthyl-thiurame, le disulfure de tétrabutyl-thiurame, le disulfure de tétra-iso-butyl-thiurame, le disulfure de tétrabenzyl-thiurame et les mélanges de ces composés. Parmi eux, le disulfure de tétrabenzyl-thiurame est retenu de manière plus préférentielle.

A titre d'autres exemples d'accélérateurs utilisables conformément à l'invention, on citera les dithiocarbamates de zinc, en particulier le tétraméthyl dithiocarbamate de zinc, le tétraéthyl dithiocarbamate de zinc et que le tétrabenzyle dithiocarbamate de zinc. Parmi eux, le tétrabenzyl dithiocarbamate de zinc est plus préférentiellement retenu.

Pour conclure, les accélérateurs primaires de vulcanisation utilisés dans le cadre de la présente invention sont encore plus préférentiellement choisis dans le groupe constitué par disulfure de 2-mercaptobenzothiazyle (en abrégé "MBTS"), N-cyclohexyl-2-benzothiazyle sulfénamide (en abrégé "CBS"), N,N-dicyclohexyl-2-benzothiazyle sulfénamide (en abrégé "DCBS"), N-ter-butyl-2-benzothiazyle sulfénamide (en abrégé "TBBS"), N-ter-butyl-2-benzothiazyle sulfénimide (en abrégé "TBSI") et les mélanges de ces composés.

### III. EXEMPLES DE REALISATION DE L'INVENTION

Dans les exemples de réalisation qui suivent, l'invention est mise en oeuvre avec le tétraméthyl-disiloxane polysulfuré cyclique de formule particulière (II-1) ci-après :

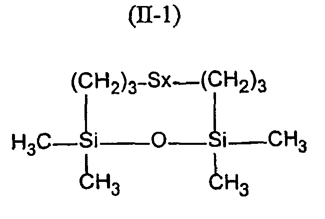

### III-1. Synthèse du polysulfure siloxane

Le produit ci-dessus de formule (II-1) (ci-après dénommé produit D) est synthétisé, dans les exemples qui suivent, selon les deux procédés différents schématisés sur la figure 1 (hydrolyse ou alcoolyse).

### A) Synthèse 1 (hydrolyse)

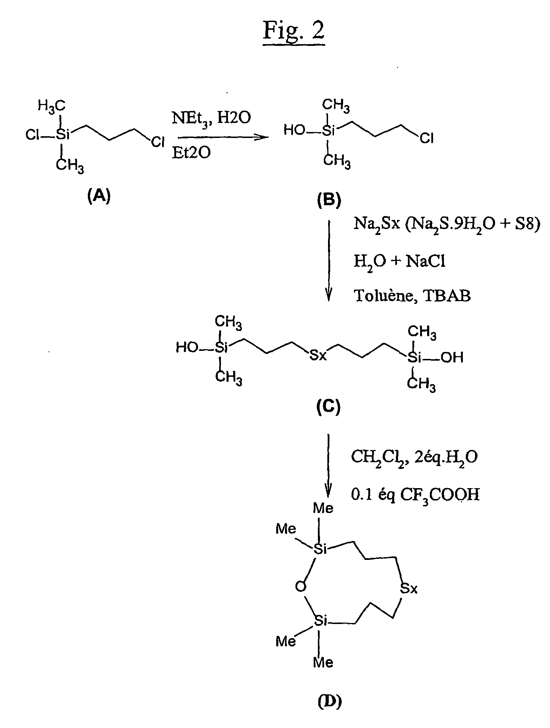

La synthèse du produit D est réalisée selon un procédé conforme à l'invention en plusieurs étapes, à partir du chloropropyldiméthylchlorosilane (ci-après dénommé produit A), via le chloropropyldiméthylsilanol (ci-après dénommé produit B) et le polysulfure de bis-(propyldiméthylsilanol) (ci-après dénommé produit C). Le schéma de synthèse appliqué est celui indiqué sur la figure 2 annexée.

### a) préparation du chloropropyldiméthylsilanol (produit B)

Comme cela a été expliqué précédemment, on peut préparer le produit B directement par hydrolyse du produit A de départ, dans un solvant organique inerte (éther), en présence d'eau comme donneur d'hydroxyles et de triéthylamine destinée à piéger l'acide chlorhydrique libéré. On introduit de préférence un excès d'eau de manière à favoriser la réaction souhaitée, et éviter la réaction de condensation du silanol généré sur le chlorosilane additionné. L'emploi d'un léger excès de triéthylamine assure le piégeage total de l'acide chlorhydrique, la triéthylamine résiduelle étant distillée une fois la réaction terminée.

On procède plus précisément comme suit.

Dans un tricol de 500 mL, surmonté d'un réfrigérant et muni d'une agitation magnétique, on introduit 9,78 mL de triéthylamine (70,1 mmol soit 1,5 équivalents par rapport au produit A), 3,36 g d'eau (187 mmol soit 4 équivalents par rapport au produit A) puis 150 mL d'éther. On refroidit cette solution à l'aide d'un bain de glace, à une température inférieure à 10°C, avant d'additionner lentement une solution de produit A (8,0 g, soit 46,7 mmol dans 80 mL d'éther). On observe l'apparition immédiate d'un précipité blanc qui correspond au chlorhydrate de triéthylamine. Lorsque l'ajout de produit A est terminé, l'agitation du milieu réactionnel est poursuivie pendant 30 min, en restant à une température inférieure à 10°C. Le précipité formé est alors éliminé par filtration et le filtrat recueilli est séché sur du sulfate de magnésium, filtré puis concentré sous vide. La triéthylamine résiduelle est éliminée par distillation. On recueille ainsi 6,1 g d'un liquide jaune vif qui correspond, d'après les analyses réalisées en RMN et en spectrométrie de masse, au produit B visé (pureté du produit supérieure à 95%).

### b) préparation du polysulfure de bis(propyldiméthylsilanol) (produit C)

Dans cette étape, le polysulfure de sodium, généré par insertion de soufre dans du sulfure de sodium Na₂S en milieu aqueux, vient substituer l'atome de chlore de deux molécules du produit C en solution dans du toluène. La réaction est conduite en présence d'un catalyseur de transfert de phase (TBAB) et de chlorure de sodium NaCl.

Dans un tricol de 250 mL, surmonté d'un réfrigérant et muni d'une agitation magnétique, on introduit 4,01 g (soit 16,7 mmol) de Na₂S.9H₂O ainsi que 1,60 g (soit 50,1 mmol) de soufre qui sont dissous dans 40 mL d'une solution aqueuse de NaCl (5,73 g soit 98,2 mmol) et 8 mL de toluène. Ce mélange est chauffé à 85°C ; on observe, lors de la montée en température, que le milieu réactionnel passe de la couleur jaune à la couleur rouge foncé.

Une fois la température de consigne atteinte, on introduit en une seule fois 0,286 g de TBAB (soit 0,88 mmol), puis on commence l'addition goutte à goutte du produit B (5,0 g soit 32,7 mmol) en solution dans 30 mL de toluène. Au cours de l'addition, la phase toluénique présente une coloration rouge vif virant progressivement à l'orange, tandis que la phase aqueuse initialement rouge vif pâlit jusqu'à devenir incolore et limpide, une fois la coulée terminée. La réaction est ainsi poursuivie pendant 75 min, à la température de 85°C, puis le milieu réactionnel est refroidi sous argon.

Le milieu réactionnel est ensuite transféré dans une ampoule à décanter de façon à isoler la phase toluénique, qui est séchée sur du sulfate de magnésium après avoir été lavée à l'eau. La solution organique est ensuite filtrée et reprise à l'éther avant d'être distillée dans un four à boules (40°C), afin d'évacuer le chloropropyldiméthylsilanol (produit B) résiduel.

On recueille finalement 3,92g d'un liquide orange visqueux dont les analyses de RMN et de spectrométrie de masse confirment la présence majoritaire de polysulfure de bis-(propyldiméthylsilanol) - produit C - accompagné de traces du produit de départ et du produit D.

### c) préparation du polysulfure tétraméthyl-disiloxane cyclique (produit D)

Dans un tricol de 100mL, on introduit 0,24g d'eau (2 équivalents soit 13,4mmol) et une quantité catalytique d'acide trifluoroacétique (0,1 équivalent soit 0,67mmol), auxquels on ajoute 2g du produit C dilué dans 18 mL de dichlorométhane.

Le milieu réactionnel est maintenu sous agitation pendant 24 heures avant d'être séché sur du sulfate de magnésium, filtré et concentré sous vide.

On recueille 1,8g du produit D, dont la structure ci-dessous est confirmée par analyse RMN :

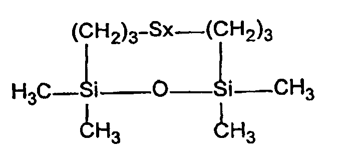

Le produit D ainsi synthétisé est en fait constitué d'une distribution de polysulfures, allant du disulfure (x=2) à l'hexasulfure (x=6), centrée sur une valeur moyenne proche de 4,0 (x = 3,9). Le taux de disulfure S₂, déterminé par RMN, est égal à environ 18% des motifs polysulfures.

L'homme du métier comprendra que des conditions de synthèse modifiées permettraient d'obtenir d'autres distributions de polysulfures, avec des valeurs moyennes de x variables mais de préférence comprises entre 3 et 5.

### B) Synthèse 2 (alcoolyse)

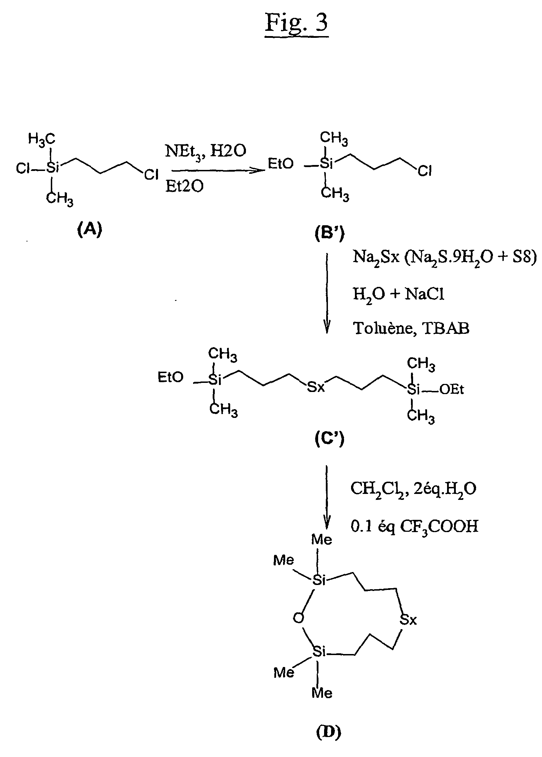

La synthèse du produit D est réalisée selon un autre procédé conforme à l'invention, en plusieurs étapes, à partir du chloropropyldiméthylchlorosilane (produit A), via le chloropropyl-diméthyléthoxysilane (produit B') et le polysulfure de bis-(propyldiméthyléthoxysilane) (produit C'). Le schéma de synthèse appliqué est celui indiqué sur la figure 3 annexée.

### a) préparation du chloropropyldiméthyléthoxysilane(produit B')

La première étape consiste en une alcoolyse permettant de substituer le chlore porté par l'atome de silicium du produit A par un groupement éthoxyle de l'éthanol, cette réaction étant menée en présence de triéthylamine destinée à piéger l'acide chlorhydrique libéré au cours de la réaction.

On procède plus précisément comme suit.

Dans un tricol de 2 L (préalablement séché dans une étuve pendant 24 h), surmonté d'un réfrigérant et muni d'une agitation magnétique, on introduit, sous courant d'argon, 950 mL d'éthanol (grade Normapur) puis 288 mL de triéthylamine (2,07 mol soit 209 g) à l'aide d'une seringue. Le mélange est alors refroidi à une température d'environ 5°C, avant de débuter l'addition du produit A (237,7 g soit 1,38 mol - produit de la société ABCR commercialisé sous la référence SIC2336.0), réalisée grâce à une pompe péristaltique ; l'acide chlorhydrique libéré est immédiatement piégé par la triéthylamine en formant le chlorhydrate de triéthylamine.

Une fois la coulée terminée (après environ 8h), le bain de glace est retiré tandis que l'agitation est poursuivie à la température ambiante toute la nuit, sous courant d'argon. Après huit heures, l'analyse CPG (chromatographie en phase gazeuse) montre la disparition du pic correspondant au produit A de départ et la formation du chloropropyldiméthyléthoxysilane (produit B'). Le milieu réactionnel est alors filtré sur tube d'Alhin afin de séparer le produit B' en solution dans l'éthanol du chlorhydrate de triéthylamine.

Le filtrat contenant le produit B' est concentré puis distillé sous vide (2 mm Hg ; température de bain d'huile 70°C ; température en haut de colonne 45°C), afin d'éliminer l'excès de triéthylamine libre et d'isoler le produit B' à l'état pur. On recueille ainsi 160 g d'un liquide incolore dont les analyses de RMN et de spectrométrie de masse confirment bien qu'il s'agit du produit B' visé.

### b) préparation du polysulfure de bis(propyldiméthyléthoxysilane)(produit C')

Dans cette étape, le polysulfure de sodium, généré par insertion de soufre dans du sulfure de sodium Na₂S en milieu aqueux, vient substituer l'atome de chlore de deux molécules du produit (B') en solution dans du toluène. La réaction est conduite en présence d'un catalyseur de transfert de phase (TBAB) et de chlorure de sodium NaCl.

Dans un tricol de 250 mL, surmonté d'un réfrigérant et muni d'une agitation magnétique, on introduit 3,50 g (soit 14,5 mmol) de Na₂S.9H₂O ainsi que 1,40 g (soit 43,7 mmol) de soufre qui sont dissous dans 40 mL d'une solution aqueuse de NaCl (5,0 g soit 85,8 mmol) et 8 mL de toluène. Ce mélange est chauffé à 85°C ; on observe, lors de la montée en température, que le milieu réactionnel passe de la couleur jaune à la couleur rouge foncé.

Une fois la température de consigne atteinte, on introduit en une seule fois 0,25 g de TBAB (soit 0,77 mmol), puis on commence l'addition goutte à goutte du produit (B') (5,17 g soit 28,6 mmol) en solution dans 30 mL de toluène. Au cours de l'addition, la phase toluénique présente une coloration rouge vif virant progressivement à l'orange, tandis que la phase aqueuse initialement rouge vif pâlit jusqu'à devenir incolore et limpide, une fois la coulée terminée. La réaction est ainsi poursuivie pendant 75 min, à la température de 85°C, puis le milieu réactionnel est refroidi sous argon.

Le milieu réactionnel est ensuite transvasé dans une ampoule à décanter de façon à isoler la phase toluénique, qui est séchée sur du sulfate de magnésium après avoir été lavée à l'eau. La solution organique est ensuite filtrée et reprise à l'éther avant d'être distillée dans un four à boules (40°C), afin d'évacuer le chloropropyldiméthyléthoxysilane (produit B') résiduel, soit 0,52 g. On recueille finalement 3,84 g d'un liquide rouge- orangé visqueux dont les analyses de RMN et de spectrométrie de masse confirment la présence majoritaire de polysulfure de bis-(propyldiméthyléthoxysilane) accompagné du produit de départ à l'état de traces.

### c) préparation du tétraméthyl-disiloxane polysulfuré cyclique (produit D)

Dans un tricol de 500 mL, on introduit 2,23 g d'eau (2 équivalents soit 0,124 mol) puis une quantité catalytique d'acide trifluoroacétique (0,1 équivalent soit 6.21 mmol ou 0,7 g), auxquels on ajoute 26 g (0,0621 mol) de polysulfure de bis (propyldiméthyléthoxysilane) (produit C') dilués dans 210 mL de dichlorométhane.

Le milieu réactionnel est abandonné sous agitation à la température ambiante pendant 24 h, puis séché sur du sulfate de magnésium, filtré et concentré sous vide. On isole ainsi 20,5g d'un liquide jaune pâle très visqueux correspondant de façon majoritaire d'après l'analyse RMN au produit attendu, les traces de solvants résiduels éventuelles pouvant être éliminées en soumettant le produit à un vide de 200 mm Hg, à la température de 40°C, pendant 48 h.

Le produit D ainsi synthétisé apparaît quasiment identique à celui obtenu précédemment par hydrolyse (distribution de polysulfures de x = 2 à x = 6 - valeur moyenne x = 4,0 - taux de disulfure S₂ égal à environ 17% des motifs polysulfures).

### III-2. Utilisation comme agent de réticulation

### A) Essai 1

Ce premier essai, réalisé à partir d'un mélangeur de laboratoire, a pour but de démontrer qu'il est possible de réticuler, sans addition de soufre, une composition de caoutchouc à l'aide du produit D précédemment synthétisé.

Est aussi démontrée l'amélioration de la stabilité thermique (tenue à la réversion) des compositions à base du polysulfure selon l'invention, comparées à des compositions conventionnelles à base de soufre comme agent réticulant.

Les trois compositions testées sont identiques à la nature de l'agent de réticulation près :
- composition C-1 : soufre (1 pce);
- composition C-2 : produit D (3,7 pce);
- composition C-3 : produit D (7,5 pce).

La composition C-1 est le témoin de cet essai, les compositions C-2 et C-3 utilisent le polysulfure siloxane conforme à l'invention, à un taux préférentiel compris entre 3 et 12 pce.

Ces compositions sont préparées de manière connue, comme suit : on introduit dans un mélangeur interne, rempli à 70% et dont la température initiale de cuve est d'environ 60°C, l'élastomère diénique (ou le mélange d'élastomères diéniques, le cas échéant), la charge renforçante, puis les divers autres ingrédients à l'exception du système de réticulation comportant au moins le polysulfure siloxane (produit D) et un accélérateur. On conduit alors un travail thermomécanique (phase non-productive) en une ou deux étapes (durée totale du malaxage égale à environ 7 min), jusqu'à atteindre une température maximale de "tombée" d'environ 165°C. On récupère le mélange ainsi obtenu, on le refroidit puis on ajoute le polysulfure siloxane (produit D) et l'accélérateur sur un mélangeur externe (homo-finisseur) à 40°C, en mélangeant le tout (phase productive) pendant 3 à 4 minutes. Les compositions ainsi obtenues sont ensuite calandrées sous la forme de plaques (épaisseur de 2 à 3 mm) ou de feuilles fines de caoutchouc pour la mesure de leurs propriétés physiques ou mécaniques, ou extrudées pour former des profilés utilisables directement, après découpage et/ou assemblage aux dimensions souhaitées, comme produits semi-finis pour pneumatiques, par exemple comme bandes de roulement.

Les tableaux 1 et 2 donnent la formulation des différentes compositions (tableau 1 - taux des différents produits exprimés en pce), les propriétés rhéométriques (à 165°C), ainsi que l'évolution du couple rhéométrique, après 2 heures à 165°C, représentative de la stabilité thermique des compositions. La figure 4 montre quant à elle l'évolution du couple rhéométrique (en dN.m) en fonction du temps (en min), pour une température de 165°C, les courbes C1 à C3 correspondant respectivement aux compositions C-1 à C-3.

Les résultats du tableau 2 démontrent la capacité inattendue du polysulfure siloxane à réticuler les chaînes d'élastomère, comme illustré par les valeurs de Cₘₐₓ et de Δcouple. On note par ailleurs l'augmentation du couple Cₘₐₓ et de Δcouple avec celle du taux de polysulfure siloxane. La stabilité thermique (résistance à la réversion) des compositions C-2 et C-3 est remarquable, supérieure à celle observée sur le témoin, ceci quel que soit le taux de polysulfure siloxane utilisé, comme démontré par les pertes ΔR₆₀ et ΔR₁₂₀ qui se révèlent nettement inférieures à celles enregistrées pour la composition témoin C-1.

La figure 4 confirme bien l'aptitude du produit D à réticuler les compositions de caoutchouc tout en leur offrant une meilleure résistance à la réversion. On note en particulier la très faible réversion (diminution de couple au delà de Cₘₐₓ) pour la composition C-2, illustrée tant par les paramètres ΔR₆₀ et ΔR₁₂₀ du tableau 2 que par la forme de la courbe C2 (existence d'un plateau de vulcanisation très long) de la figure 4.

### B) Essai 2

Cet essai confirme l'effet technique inattendu d'agent de réticulation du polysulfure siloxane, ainsi que la stabilité thermique améliorée des compositions de caoutchouc, en présence de divers accélérateurs connus de vulcanisation.

On prépare pour cela cinq compositions similaires à celles de l'essai 1 précédent, ces compositions étant identiques à la nature du système de réticulation près (soufre ou polysulfure siloxane, nature de l'accélérateur primaire de vulcanisation).

La composition C-4 est la composition témoin (soufre plus accélérateur sulfénamide), les compositions C-5 à C-8 utilisent le polysulfure siloxane conforme à l'invention, avec différents accélérateurs.

Les tableaux 3 et 4 donnent la formulation de ces compositions (tableau 3 - taux des différents produits exprimés en pce), leurs propriétés rhéométriques à 165°C et l'évolution du couple rhéométrique après 2 heures à 165°C (réversion).

L'étude des résultats du tableau 4 montre clairement que toutes les compositions à base de polysulfure siloxane présentent une réticulation efficace, quel que soit l'accélérateur envisagé ou son taux (compris entre 0,5 et 2,0 pce), avec notamment un rendement de vulcanisation Δcouple supérieur à celui du témoin. La résistance à la réversion est nettement supérieure pour les compositions selon l'invention, comme illustré par des pertes ΔR₆₀ et ΔR₁₂₀ nettement inférieures quel que soit le type d'accélérateur utilisé.

### C) Essai 3

Cet essai a été conduit sur un mélangeur de plus grande taille, comparé aux essais précédents, pour permettre une caractérisation des compositions de caoutchouc à l'état cru comme à l'état cuit, à l'optimum de cuisson à 150°C et après une cuisson prolongée (2 heures à 150°C).

Il confirme la stabilité thermique améliorée des compositions selon l'invention, en s'appuyant sur d'autres propriétés (évolution des modules).

On compare pour cela deux compositions de caoutchouc similaires à celles de l'essai 1 précédent, identiques à l'agent de réticulation près:
- composition C-9 (témoin) : soufre (1 pce);
- composition C-10 (invention) : produit D (7,5 pce).

Les tableaux 5 et 6 donnent la formulation des deux compositions, leurs propriétés avant cuisson et après cuisson à 150°C. La stabilité thermique des compositions est caractérisée par l'évolution des modules ΔMA100 et ΔMA300.

On constate que la composition selon l'invention C-10, comparée à la composition C-9, non seulement ne présente aucune pénalisation des propriétés à l'état cru, mais révèle au contraire une plasticité Mooney nettement réduite, synonyme d'une aptitude à la mise en oeuvre à l'état cru qui est améliorée. Les temps de grillage T5 sont identiques entre les deux compositions.

Après cuisson à 150°C (à l'optimum de cuisson), on observe de manière inattendue pour la composition à base du polysulfure siloxane de l'invention :
- des valeurs de modules sous forte déformation MA100, MA300 et de rapport MA300/MA100 augmentées, indicatrices d'un renforcement de haute qualité;
- des propriétés à la rupture équivalentes;
- des propriétés d'hystérèse améliorées, comme illustré par des valeurs significativement plus basses de ΔG* et de tan(δ)ₘₐₓ, favorables à la résistance au roulement;
- enfin, une évolution des paramètres ΔMA100 et ΔMA300 qui confirme la très bonne stabilité thermique des compositions selon l'invention, comparée à celle de la composition témoin réticulée de manière conventionnelle à l'aide de soufre.

Ainsi, grâce à l'utilisation d'un polysulfure disiloxane conforme à l'invention à titre d'agent de réticulation, en lieu et place du soufre conventionnel, il est possible de combiner une réticulation efficace et une stabilité thermique (résistance à la réversion) améliorée.

L'invention trouve des applications particulièrement avantageuses dans les compositions de caoutchouc utilisables pour la fabrication d'articles finis ou produits semi-finis destinés à tout système de liaison au sol des véhicules automobiles, tels que pneumatiques, appuis internes de sécurité pour pneumatiques, roues, ressorts en caoutchouc, articulations élastomériques, autres éléments de suspension et anti-vibratoire.

**Tableau 1**

| Composition N° : | C-1 | C-2 | C-3 |
|---|---|---|---|
| NR (1) | 100 | 100 | 100 |
| noir de carbone (2) | 50 | 50 | 50 |
| ZnO (3) | 4 | 4 | 4 |
| acide stéarique (4) | 2 | 2 | 2 |
| antioxydant (5) | 2 | 2 | 2 |
| soufre (6) | 1 | - | - |
| produit D (7) | - | 3.7 | 7.5 |
| accélérateur (8) | 1 | 1 | 1 |

| | | | |
|---|---|---|---|
| (1) caoutchouc naturel ; | | | |
| (2) N375 (société Cabot) ; | | | |
| (3) oxyde de zinc (grade industriel - société Umicore) ; | | | |
| (4) stéarine ("Pristerene 4931") de la société Uniqema ; | | | |
| (5) N-1,3-diméthylbutyl-N-phényl-para-phénylènediamine ("Santoflex 13" de la société Flexsys) ; | | | |
| (6) soufre (soufre synthétique de la société Solvay) ; | | | |
| (7) polysulfure siloxane de formule (II-1) synthétise selon paragraphe III-I-A); | | | |
| (8) N-cyclohexyl-2-benzothiazyle-sulfénamide ("Santocure CBS" de la société Flexsys). | | | |

**Tableau 2**

| Composition N° : | C-1 | C-2 | C-3 |
|---|---|---|---|
| *Propriétés rhéométriques (165°C):* | | | |
| Cₘᵢₙ (dN.m) | 1.03 | 0.93 | 0.77 |
| Cₘₐₓ (dN.m) | 7.07 | 5.65 | 6.91 |
| ΔCouple (dN.m) | 6.04 | 4.72 | 6.14 |
| tᵢ (min) | 0 | 1.5 | 1.5 |

| *Réversion (2 heures à 165°C)* | | | |
|---|---|---|---|
| ΔR₆₀ (%) | - 23 | - 4 | -12 |
| ΔR₁₂₀ (%) | - 25 | - 5 | -13 |

**Tableau 3**

| Composition N° : | C-4 | C-5 | C-6 | C-7 | C-8 |
|---|---|---|---|---|---|
| NR (1) | 100 | 100 | 100 | 100 | 100 |
| noir de carbone (2) | 50 | 50 | 50 | 50 | 50 |
| ZnO (3) | 4 | 4 | 4 | 4 | 4 |
| acide stéarique (4) | 2 | 2 | 2 | 2 | 2 |
| antioxydant (5) | 2 | 2 | 2 | 2 | 2 |
| soufre (6) | 1 | - | - | - | - |
| produit D (7) | - | 7.5 | 7.5 | 7.5 | 7.5 |
| accélérateur CBS (8) | 1 | 1 | - | - | - |
| accélérateur TBBS (9) | - | - | 0.9 | - | - |
| accélérateur TBSI (10) | - | - | - | 1.5 | - |
| accélérateur MBTS (11) | - | - | - | - | 1.3 |

| | | | | | |
|---|---|---|---|---|---|
| (1) à (8) idem tableau 1; | | | | | |
| (9) N-terbutyl-2-benzothiazyle-sulfénamide ("Santocure TBBS" de Flexsys) ; | | | | | |
| (10) N-terbutyl-2-benzothiazyle-sulfénimide ("Santocure TBSI" de Flexsys); | | | | | |
| (11) Disulfure de 2-mercaptobenzothiazyle ("Perkacit MBTS" Flexsys). | | | | | |

**Tableau 4**

| Composition N° : | C-4 | C-5 | C-6 | C-7 | C-8 |
|---|---|---|---|---|---|
| *Propriétés rhéométriques (165°C):* | | | | | |
| Cₘᵢₙ (dN.m) | 0.97 | 0.80 | 0.84 | 0.76 | 0.84 |
| Cₘₐₓ (dN.m) | 6.85 | 7.24 | 7.39 | 8.72 | 7.17 |
| ΔCouple (dN.m) | 5.88 | 6.44 | 6.55 | 7.96 | 6.33 |
| tᵢ (min) | 0 | 1.7 | 1.9 | 2.0 | 0.8 |

| *Réversion (2 heures à 165°C)* | | | | | |
|---|---|---|---|---|---|
| ΔR₆₀ (%) | - 24 | - 10 | - 7 | - 4 | - 5 |
| ΔR₁₂₀ (%) | -26 | -14 | - 10 | -5 | -7 |

**Tableau 5**

| Composition N° : | C-9 | C-10 |
|---|---|---|
| NR (1) | 100 | 100 |
| noir de carbone (2) | 50 | 50 |
| ZnO (3) | 4 | 4 |
| acide stéarique (4) | 2 | 2 |
| antioxydant (5) | 2 | 2 |
| soufre (6) | 1 | - |
| produit D (7) | - | 7.5 |
| accélérateur (8) | 1 | 1 |

| | | |
|---|---|---|
| (1) à (8) idem tableau 1. | | |

**Tableau 6**

| Composition N° : | C-9 | C-10 |
|---|---|---|
| *Propriétés avant cuisson:* | | |
| Mooney (UM) | 83 | 62 |
| T5 (min) | 16 | 16 |

| *Propriétés après cuisson (optimum à 150°C):* | | |
|---|---|---|
| MA10 (MPa) | 4.5 | 4.6 |
| MA100 (MPa) | 1.8 | 2.0 |
| MA300 (MPa) | 2.5 | 2.7 |
| MA300/MA100 | 1.35 | 1.38 |
| ΔG* | 2.74 | 2.43 |
| tan(δ)ₘₐₓ | 0.215 | 0.193 |
| contrainte rupture (MPa) | 29.5 | 28.8 |
| allongement rupture (%) | 561 | 546 |

| *Réversion (2heures à 150°C):* | | |
|---|---|---|
| ΔMA100(%) | - 10 | - 3 |
| ΔMA300 (%) | - 13 | -4 |

## Revendications

1. Composé polysulfure siloxane répondant à la formule générale : 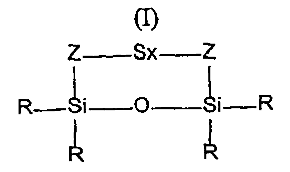
dans laquelle :
- le nombre x, entier ou fractionnaire, est égal ou supérieur à 2;
- les radicaux Z, identiques ou différents, sont des groupes de liaison divalents;
- les radicaux R, identiques ou différents, sont des groupes hydrocarbonés.

2. Composé selon la revendication 1, les radicaux R étant choisis parmi les groupes hydrocarbonés et les groupements Z parmi les groupes de liaison divalents, comportant chacun de 1 à 18 atomes de carbone.

3. Composé selon la revendication 2, les radicaux R étant choisis parmi les alkyles en C₁₋C₆, les cycloalkyles en C₅-C₈ et le radical phényle ; les groupements Z étant choisis parmi les alkylènes en C₁-C₁₈ et les arylènes en C₆-C₁₂.

4. Composé selon la revendication 3, les radicaux R étant choisis parmi les alkyles en C₁₋C₆ et les groupements Z parmi les alkylènes en C₁-C₁₀.

5. Composé selon la revendication 4, dans laquelle les radicaux R sont des alkyles en C₁₋C₃, les groupements Z des alkylènes en C₁-C₄.

6. Composé selon la revendication 5, les groupements Z étant choisis parmi les alkylènes en C₂-C₄.

7. Composé selon la revendication 6, le polysulfure siloxane répondant à la formule (II) :

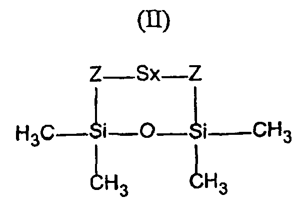

8. Composé selon la revendication 7, Z représentant le groupe propylène.

9. Composé selon l'une quelconque des revendications 1 à 8, x étant supérieur à 2.

10. Composé selon la revendication 9, x étant compris entre 3 et 5.

11. Procédé d'obtention d'un polysulfure siloxane selon l'une quelconque des revendications 1 à 10, **caractérisé en ce qu'**il comporte les étapes suivantes (R, Z et x ayant les significations précédentes) :
• **a**) on part d'un organosilane halogéné (ci-après produit A) de formule (Hal = halogène): 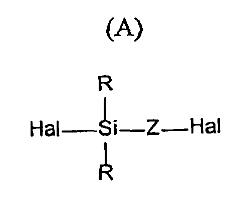
• **b**) on lui fait subir soit une alcoolyse par action d'un alcool R'-OH (R' radical hydrocarboné), soit une hydrolyse par action d'eau dans un solvant organique inerte, dans les deux cas en présence d'une base organique pour piéger l'halogénure d'acide formé, pour obtenir (ci-après produit B) soit un monoalkoxysilane (dans ce cas, R' est le radical hydrocarboné dans la formule (B)), soit un mono-hydroxysilane (dans ce cas, R' est H dans la formule (B)), de formule : 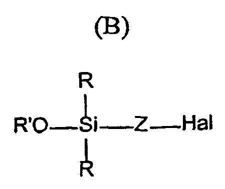
• **c**) on réalise une étape de sulfuration sur le produit B par action d'un polysulfure, pour obtenir à titre de produit intermédiaire (ci-après produit C) un polysulfure d'alkoxysilane ou d'hydroxysilane de formule : 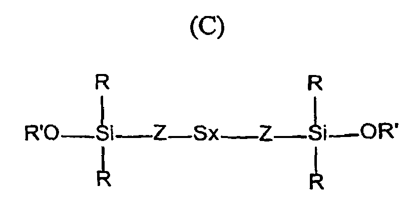
• **d**) puis on réalise une étape de cyclisation du produit C pour générer le produit de formule (I) visé :

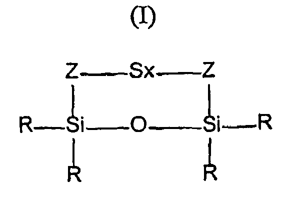

12. Procédé selon la revendication 11, Hal étant le brome ou le chlore, de préférence le chlore.

13. Procédé selon les revendications 11 ou 12, R' étant choisi parmi H, les alkyles en C₁-C₆, de préférence en C₁-C₃.

14. Procédé selon l'une quelconque des revendications 11 à 13, l'alcoolyse étant conduite à une température inférieure à 15°C.

15. Procédé selon l'une quelconque des revendications 11 à 14, la base organique destinée à piéger l'halogénure d'acide formé étant une amine tertiaire.

16. Procédé selon l'une quelconque des revendications 11 à 13 et 15, l'étape (b) consistant en une hydrolyse du produit A.

17. Procédé selon l'une quelconque des revendications 11 à 16, le polysulfure de l'étape (d) étant un polysulfure d'ammonium ou métallique.

18. Procédé selon la revendication 17, le polysulfure d'ammonium ou métallique ayant pour formule M₂Sₓ ou M'Sₓ (M = métal alcalin ou NH₄ ; M' = Zn ou métal alcalino-terreux).

19. Procédé selon la revendication 18, le polysulfure métallique étant un polysulfure de sodium Na₂Sₓ, de préférence généré par action de soufre sur Na₂S.

20. Procédé selon l'une quelconque des revendications 17 à 19, l'étape de sulfuration étant conduite en phase aqueuse, de préférence dans un milieu biphasique eau/solvant organique.

21. Procédé selon la revendication 20, l'étape de sulfuration étant conduite en présence d'un catalyseur de transfert de phase.

22. Procédé selon la revendication 21, l'étape de sulfuration étant conduite en présence d'un sel de formule M"Hal ou M"₂SO₄, M" étant choisi parmi Li, Na et K et Hal étant choisi parmi F, Cl et Br.

23. Procédé selon l'une quelconque des revendications 11 à 22, l'étape d) de cyclisation étant conduite en milieu acide.

24. Système de réticulation comportant un polysulfure siloxane selon l'une quelconque des revendications 1 à 10 et au moins un accélérateur primaire de vulcanisation.

25. Système de réticulation selon la revendication 24, l'accélérateur de vulcanisation étant choisi dans le groupe constitué par disulfure de 2-mercaptobenzothiazyle, N-cyclohexyl-2-benzothiazyle sulfénamide, N,N-dicyclohexyl-2-benzothiazyle sulfénamide, N-ter-butyl-2-benzothiazyle sulfénamide, N-ter-butyl-2-benzothiazyle sulfénimide et les mélanges de ces composés.

26. Utilisation à titre d'agent de réticulation dans une composition à base d'au moins un élastomère diénique et une charge renforçante, d'un polysulfure siloxane selon l'une quelconque des revendications 1 à 10.

27. Utilisation selon la revendication 26, l'élastomère diénique étant choisi dans le groupe constitué par les polybutadiènes, le caoutchouc naturel, les polyisoprènes de synthèse, les copolymères de butadiène, les copolymères d'isoprène et les mélanges de ces élastomères.

28. Utilisation selon les revendications 26 ou 27, la charge renforçante étant présente à un taux compris entre 30 et 150 pce (parties en poids pour cent d'élastomère diénique).

29. Utilisation selon la revendication 28, la charge renforçante étant majoritairement une charge inorganique, de préférence de la silice.

30. Utilisation selon la revendication 28, la charge renforçante étant majoritairement une charge organique, de préférence du noir de carbone.

31. Utilisation selon l'une quelconque des revendications 27 à 30, l'élastomère diénique étant un élastomère isoprénique, de préférence un polyisoprène de synthèse ou du caoutchouc naturel.

32. Utilisation selon l'une quelconque des revendications 27 à 31, la quantité de polysulfure siloxane étant supérieure à 0,5 pce, de préférence comprise entre 1 et 15 pce.

33. Utilisation selon la revendication 32, la quantité de polysulfure siloxane étant comprise entre 3 et 12 pce.

## Patentansprüche

1. Polysulfidsiloxan der folgenden allgemeinen Formel: 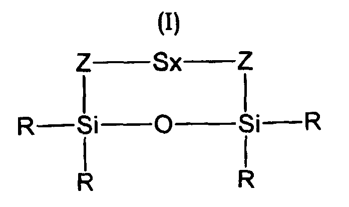
worin bedeuten:
- die Zahl x, die eine ganze Zahl oder eine rationale Zahl ist, 2 oder darüber;
- die Gruppen Z, die gleich oder verschieden sind, zweiwertige Verbindungsgruppen;
- die Gruppen R, die gleich oder verschieden sind, Kohlenwasserstoffgruppen.

2. Verbindung nach Anspruch 1, wobei die Gruppen R unter den Kohlenwasserstoffgruppen und die Gruppen Z unter den zweiwertigen Gruppen ausgewählt sind, die jeweils 1 bis 18 Kohlenstoffatome aufweisen.

3. Verbindung nach Anspruch 2, wobei die Gruppen R unter den C₁₋₆-Alkylgruppen, C₅₋₈-Alkylgruppen und der Phenylgruppe ausgewählt sind; und die Gruppen Z unter den C₁₋₁₈₋Alkylengruppen und den C₆₋₁₂-Arylengruppen ausgewählt sind.

4. Verbindung nach Anspruch 3, wobei die Gruppen R unter den C₁₋₆-Alkylgruppen und die Gruppen Z unter den C₁₋₁₀-Alkylengruppen ausgewählt sind.

5. Verbindung nach Anspruch 4, worin die Gruppen R unter den C₁₋₃-Alkylgruppen und die Gruppen Z unter den C₁₋₄-Alkylengruppen ausgewählt sind.

6. Verbindung nach Anspruch 5, wobei die Gruppen Z unter den C₂₋₄-Alkylengruppen ausgewählt sind.

7. Verbindung nach Anspruch 6, wobei das Polysulfidsiloxan der folgenden Formel (II) entspricht

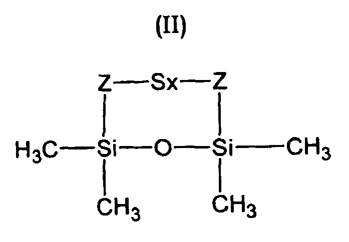

8. Verbindung nach Anspruch 7, wobei Z Propylen bedeutet.

9. Verbindung nach einem der Anspruche 1 bis 8, wobei x über 2 liegt.

10. Verbindung nach Anspruch 9, wobei x im Bereich von 3 bis 5 liegt.

11. Verfahren zur Herstellung eines Polysulfidsiloxans nach einem der Ansprüche 1 bis 10, **dadurch gekennzeichnet, dass** es die folgenden Schritte umfasst (wobei R, Z und x die oben angegebenen Bedeutungen aufweisen):
• a) man geht von einem halogenierten Organosilan (im Folgenden Produkt A) der folgenden Formel aus (Hal = Halogen): 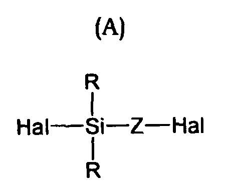
• b) mit dieser Verbindung wird entweder durch Einwirkung eines Alkohols R'-OH (R' Kohlenwasserstoffgruppe) eine Alkoholyse oder durch Einwirkung von Wasser in einem inerten organischen Lösungsmittel eine Hydrolyse durchgeführt, wobei in beiden Fällen in Gegenwart einer organischen Base gearbeitet wird, um die gebildete Halogenwasserstoffsäure abzufangen, um (im Folgenden Produkt B) entweder ein Monoalkoxysilan (in diesem Fall ist R' in Formel (B) die Kohlenwasserstoffgruppe) oder ein Monohydroxysilan (in diesem Fall bedeutet in der Formel (B) R' H) der folgenden Formel herzustellen: 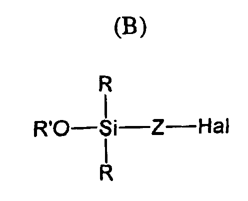
• c) mit dem Produkt B wird durch Einwirkung eines Polysulfids eine Sulfurierung durchgeführt, wodurch als Zwischenprodukt (im Folgenden Produkt C) ein Polysulfid eines Alkoxysilans oder Hydroxysilans der folgenden Formel erhalten wird: 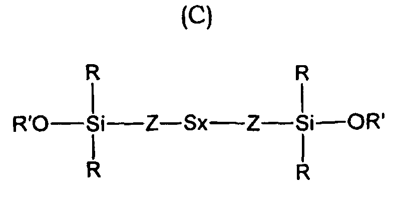
• d) worauf an dem Produkt C zur Bildung des gewünschten Produktes der Formel (I) eine Cyclisierung durchgeführt wird:

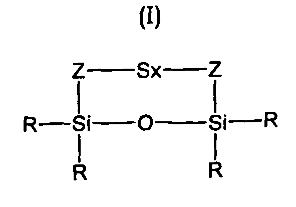

12. Verfahren nach Anspruch 11, wobei Hal Brom oder Chlor und vorzugsweise Chlor bedeutet.

13. Verfahren nach Anspruch 11 oder 12, wobei R' unter H, C₁₋₆-Alkyl und vorzugsweise C₁₋₃-Alkyl ausgewählt ist.

14. Verfahren nach einem der Ansprüche 11 bis 13, wobei die Alkoholyse bei einer Temperatur unter 15 °C durchgeführt wird.

15. Verfahren nach einem der Ansprüche 11 bis 14, wobei die organische Base, die die gebildete Halogenwasserstoffsäure abfangen soll, ein tertiäres Amin ist.

16. Verfahren nach einem der Ansprüche 11 bis 13 und 15, wobei Schritt (b) eine Hydrolyse des Produkts A ist.

17. Verfahren nach einem der Ansprüche 11 bis 16, wobei das Polysulfid in Schritt (d) ein Ammoniumpolysulfid oder Metallpolysulfid ist.

18. Verfahren nach Anspruch 17, wobei das Ammoniumpolysulfid oder Metallpolysulfid die Formel M₂Sₓ oder M'Sₓ aufweist (M = Alkalimetall oder NH₄; M' = Zn oder Erdalkalimetall).

19. Verfahren nach Anspruch 18, wobei das Metallpolysulfid ein Natriumpolysulfid Na₂Sₓ ist, das vorzugsweise durch Einwirkung von Schwefel auf Na₂S gebildet wird.

20. Verfahren nach einem der Ansprüche 17 bis 19, wobei die Sulfurierung in wässriger Phase vorzugsweise in einem zweiphasigen Medium Wasser/organisches Lösungsmittel durchgeführt wird.

21. Verfahren nach Anspruch 20, wobei die Sulfurierung in Gegenwart eines Phasentransferkatalysators erfolgt.

22. Verfahren nach Anspruch 21, wobei die Sulfurierung in Gegenwart eines Salzes der Formel M"Hal oder M"₂SO₄ durchgeführt wird, wobei M" unter Li, Na und K und Hal unter F, Cl und Br ausgewählt wird.

23. Verfahren nach einem der Ansprüche 11 bis 22, wobei der Schritt (d) der Cyclisierung in einem sauren Medium durchgeführt wird.

24. Vernetzungssystem, das ein Polysulfidsiloxan nach einem der Ansprüche 1 bis 10 und mindestens einen primären Vulkanisationsbeschleuniger umfasst.

25. Vernetzungssystem nach Anspruch 24, wobei der Vulkanisationsbeschleuniger ausgewählt ist unter 2-Mercaptobenzothiazyldisulfid, N-Cyclohexyl-2-benzothiazylsulfenamid, N,N-Dicyclohexyl-2-benzothiazylsulfenamid, N-*t*-Butyl-2-benzothiazylsulfenamid, N-*t*-Butyl-2-benzothiazylsulfenimid und den Gemischen dieser Verbindungen.

26. Verwendung eines Polysulfidsiloxans nach einem der Ansprüche 1 bis 10 in einer Zusammensetzung auf der Basis mindestens eines Dienelastomers und eines verstärkenden Füllstoffs als Vernetzungsmittel.

27. Verwendung nach Anspruch 26, wobei das Dienelastomer unter den Polybutadienen, Naturkautschuk, synthetischen Polyisoprenen, Butadien-Copolymeren, Isopren-Copolymeren und den Gemischen dieser Elastomere ausgewählt ist.

28. Verwendung nach Anspruch 26 oder 27, wobei der verstärkende Füllstoff in einer Menge von 30 bis 150 pce (Gewichtsteile auf 100 Teile Dienelastomer) vorliegt.

29. Verwendung nach Anspruch 28, wobei der verstärkende Füllstoff in einem überwiegenden Anteil aus einem anorganischen Füllstoff und vorzugsweise Kieselsäure besteht.

30. Verwendung nach Anspruch 28, wobei der verstärkende Füllstoff hauptsächlich aus einem organischen Füllstoff und vorzugsweise Ruß besteht.

31. Verwendung nach einem der Ansprüche 27 bis 30, wobei das Dienelastomer ein Isoprenelastomer und vorzugsweise ein synthetisches Polyisopren oder Naturkautschuk ist.

32. Verwendung nach einem der Ansprüche 27 bis 31, wobei der Mengenanteil des Polysulfidsiloxans über 0,5 pce und vorzugsweise im Bereich von 1 bis 15 pce liegt.

33. Verwendung nach Anspruch 32, wobei der Mengenanteil des Polysulfidsiloxans im Bereich von 3 bis 12 pce liegt.

## Claims

1. Siloxane polysulphide compound of the general formula: 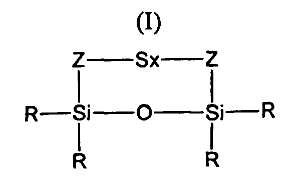
in which:
- the number x, which may be an integer or a fractional number, is equal to or greater than 2;
- the radicals Z, which may be identical or different, are divalent bond groups;
- the radicals R, which may be identical or different, are hydrocarbon groups.

2. A compound according to Claim 1, the radicals R being selected from among hydrocarbon groups and the groups Z from among divalent bond groups, each comprising 1 to 18 carbon atoms.

3. A compound according to Claim 2, the radicals R being selected from among C₁-C₆ alkyls, C₅-C₈ cycloalkyls and the phenyl radical; the groups Z being selected from among C₁₋C₁₈ alkylenes and C₆-C₁₂ arylenes.

4. A compound according to Claim 3, the radicals R being selected from among C₁-C₆ alkyls and the groups Z from among C₁-C₁₀ alkylenes.

5. A compound according to Claim 4, in which the radicals R are C₁-C₃ alkyls, and the groups Z are C₁-C₄ alkylenes.

6. A compound according to Claim 5, the groups Z being selected from among C₂-C₄ alkylenes.

7. A compound according to Claim 6, the siloxane polysulphide corresponding to formula (II):

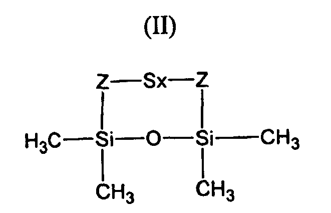

8. A compound according to Claim 7, Z representing the propylene group.

9. A compound according to any one of Claims 1 to 8, x being greater than 2.

10. A compound according to Claim 9, x being between 3 and 5.

11. A process for obtaining a siloxane polysulphide according to any one of Claims 1 to 10, **characterised in that** it comprises the following steps (R, Z and x having the above meanings):
• **a**) starting from a halogenated organosilane (hereafter product A) of formula (Hal = halogen): 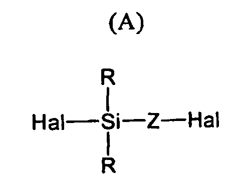
• **b**) subjecting it either to alcoholysis by action of an alcohol R'-OH (R' =hydrocarbon radical) or to hydrolysis by action of water in an inert organic solvent, in both cases in the presence of an organic base to trap the acid halide formed, in order to obtain (hereafter product B) either a monoalkoxysilane (in this case, R' is the hydrocarbon radical in formula (B)), or a monohydroxysilane (in this case, R' is H in formula (B)), of formula: 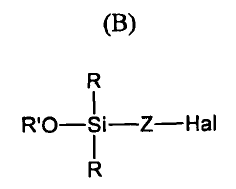
• **c**) sulphurising product B by action of a polysulphide, in order to obtain as intermediate product (hereafter product C) an alkoxysilane or hydroxysilane polysulphide of formula: 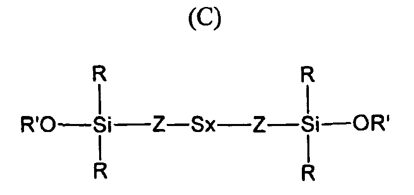
• **d**) then performing a cyclisation step on product C to produce the desired product of formula (I):

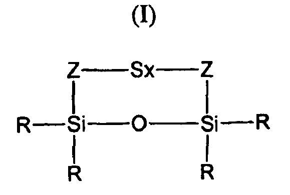

12. A process according to Claim 11, Hal being bromine or chlorine, preferably chlorine.

13. A process according to Claims 11 or 12, R' being selected from among H, C₁-C₆ alkyls, preferably C₁-C₃ alkyls.

14. A process according to any one of Claims 11 to 13, the alcoholysis being carried out at a temperature which is less than 15°C.

15. A process according to any one of Claims 11 to 14, the organic base intended to trap the acid halide formed being a tertiary amine.

16. A process according to any one of Claims 11 to 13 and 15, step (b) consisting of hydrolysis of product A.

17. A process according to any one of Claims 11 to 16, the polysulphide of step (d) being an ammonium or metal polysulphide.

18. A process according to Claim 17, the ammonium or metal polysulphide having the formula M₂Sₓ or M'Sₓ (M = alkali metal or NH₄; M' = Zn or alkaline-earth metal).

19. A process according to Claim 18, the metal polysulphide being a sodium polysulphide Na₂Sₓ, preferably produced by action of sulphur on Na₂S.

20. A process according to any one of Claims 17 to 19, the sulphurisation step being carried out in aqueous phase, preferably in a two-phase medium water/organic solvent.

21. A process according to Claim 20, the sulphurisation step being carried out in the presence of a phase transfer catalyst.

22. A process according to Claim 21, the sulphurisation step being carried out in the presence of a salt of formula M"Hal or M"₂SO₄, M" being selected from among Li, Na and K and Hal being selected from among F, Cl and Br.

23. A process according to any one of Claims 11 to 22, the cyclisation step d) being carried out in acid medium.

24. A cross-linking system comprising a siloxane polysulphide according to any one of Claims 1 to 10 and at least one primary vulcanisation accelerator.

25. A cross-linking system according to Claim 24, the vulcanisation accelerator being selected from the group consisting of 2-mercaptobenzothiazyl disulphide, N-cyclohexyl-2-benzothiazyl sulphenamide, N,N-dicyclohexyl-2-benzothiazyl sulphenamide, N-tert.-butyl-2-benzothiazyl sulphenamide, N-tert.-butyl-2-benzothiazyl sulphenimide and mixtures of these compounds.

26. The use as a cross-linking agent in a composition based on at least a diene elastomer and a reinforcing filler, of a siloxane polysulphide according to any one of Claims 1 to 10.

27. The use according to Claim 26, the diene elastomer being selected from the group consisting of polybutadienes, natural rubber, synthetic polyisoprenes, butadiene copolymers, isoprene copolymers and mixtures of these elastomers.

28. The use according to Claims 26 or 27, the reinforcing filler being present in an amount of between 30 and 150 phr (parts by weight to one hundred parts of diene elastomer).

29. The use according to Claim 28, the reinforcing filler being majoritarily an inorganic filler, preferably silica.

30. The use according to Claim 28, the reinforcing filler being majoritarily an organic filler, preferably carbon black.

31. The use according to any one of Claims 27 to 30, the diene elastomer being an isoprene elastomer, preferably a synthetic polyisoprene or natural rubber.

32. The use according to any one of Claims 27 to 31, the quantity of siloxane polysulphide being greater than 0.5 phr, preferably of between 1 and 15 phr.

33. The use according to Claim 32, the quantity of siloxane polysulphide being between 3 and 12 phr.
